# EUROPEAN PATENT SPECIFICATION

(11) **EP 0 209 380 B1**
(45) Date of publication and mention of the grant of the patent: **13.09.1995**
(21) Application number: 86305485.4
(22) Date of filing: 16.07.1986
(51) Int. Cl.: H04N 9/82, H04N 9/83

(54) **Recording and/or reproducing apparatus**
Aufzeichnungs- und/oder Wiedergabevorrichtung
Dispositif d'enregistrement et/ou de reproduction

(30) Priority: 17.07.1985 JP 155946/85
(43) Date of publication of application: 21.01.1987
(73) Proprietor: SONY CORPORATION, Tokyo 141 (JP)
(72) Inventor: Nakamura, Shinji Patents Division, Shinagawa-ku Tokyo 141 (JP); Oshima, Tomohiro Patents Division, Shinagawa-ku Tokyo 141 (JP); Moriwake, Katsuakira Patents Division, Shinagawa-ku Tokyo 141 (JP)
(74) Representative: Pilch, Adam John Michael

(56) References cited:
- EP-A- 0 036 337
- EP-A- 0 103 287
- WO-A-81/02957
- US-A- 4 237 343
- PATENT ABSTRACTS OF JAPAN, vol. 4, no. 52 (E-7)[534], 18th April 1980, page 127 E 7; & JP-A-55 23 687

## Description

This invention relates to recording and/or reproducing apparatus, such as video tape recorders (VTRs) which record and/or reproduce a video signal in tracks recorded obliquely on a magnetic tape by means of at least one rotary head.

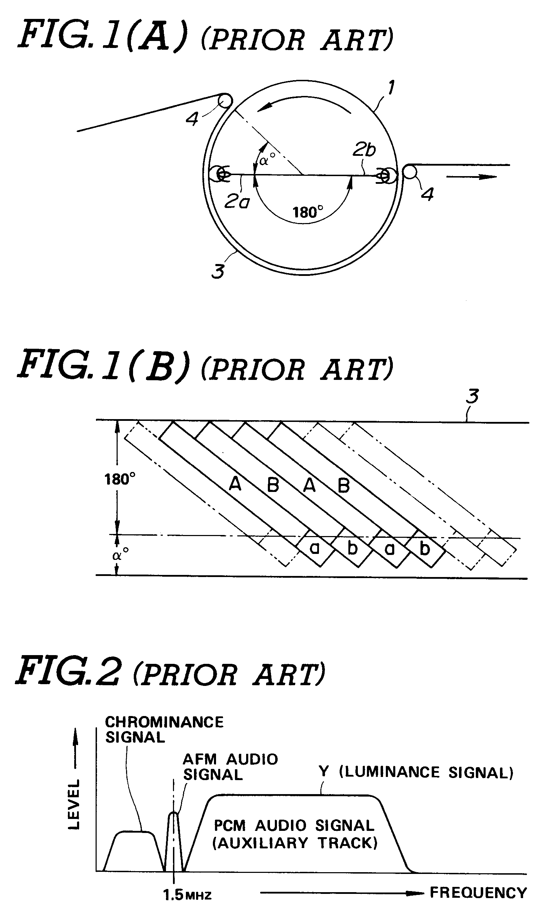

Previously-proposed helical-scan recording and/or reproducing apparatus provides recording tracks which slant across the magnetic tape, video signals being recorded on the tracks through the use of a rotary head. The audio signals may be recorded by a stationary head, as a result of which audio tracks will lie along the longitudinal axis of the magnetic tape. In such magnetic recording and/or reproducing apparatus, the rate of feed of the magnetic tape may be reduced to expand the recording time. However, when the tape feed rate is reduced, the quality of the audio signals is also reduced. To improve the quality of sound, a magnetic recording and reproducing apparatus has been developed which records the audio signals in the above-described video tracks by means of one or more rotary heads. Figures 1(A) and 1(B) of the accompanying drawings respectively show an arrangement of a rotary drum and magnetic tape in the video tape recorder mentioned above (hereinafter referred to simply as a 'VTR' and its recording format on the tracks. In Figure 1(A), the VTR includes a rotary drum 1, two rotary heads 2a and 2b, and a magnetic tape 3 wound around a portion of the periphery of the rotary drum 1 by means of guide pins 4 so that the tape 3 contacts the drum 1 over an angle of 180° + α, where α 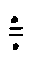 30°. The angle of that rotary contact portion is sometimes referred to as the "wrap angle".

The audio signal to be recorded is alternatingly provided from associated recording circuitry to the rotary heads 2a,2b. As the magnetic tape 3 passes about the rotary drum 1, recording tracks are formed, each of which is longer than the standard corresponding video tracks A and B by a length a and b corresponding to the angle α, as shown in Figure 1(B). The audio signals are recorded in the form of compressed-time-axis pulse-code modulated (PCM) audio signals on the portions a,b of the tape, sometimes called an auxiliary track. Video signals are recorded in the tracks A and B.

This recording and reproducing method may be incorporated in so-called 8 mm video tape recorders. A standard recording method for 8 mm video tape recorders is for the audio signals to be recorded on the main video tracks in the form of a so-called audio-frequency-modulated (AFM) audio signal consisting of a 1.5 MHz carrier wave which is frequency modulated by the audio signal and superposed on the video signal including its chrominance and luminance signals, as shown in Figure 2 of the accompanying drawings. Conventionally, the centre frequency for the chrominance signal is 3.58 MHz which is converted to about 688 KHz to occupy the lowest band of the frequency spectrum on the tracks A,B of the tape 3. The AFM audio signal occupies the next frequency band, centred at about 1.5 MHz, while the video luminance signal Y occupies the highest frequency band on the tracks A,B. On the other hand, the PCM audio signals are recorded on the auxiliary tracks a,b in a frequency range of about that of the luminance signal Y.

Hence, in the case of 8 mm video tape recorders, both PCM audio signals recorded on auxiliary tracks a and b and the above-described AFM audio signals on the video tracks A,B can be recorded and reproduced. If a stationary head is also used, yet another audio signal component can be added.

However, since the AFM audio signals and the PCM audio signals differ in their recording positions on the tape and are demodulated by different methods, these audio signals can in general only be used as separate audio sources. This technique therefore lacks flexibility in application. Also, such an AFM signal is usually monaural, while such a PCM signal can be stereophonic.

Apparatus for recording and/or reproducing signals on a recording medium is known from EP-A-0 103 287, the apparatus comprising a rotary head assembly capable of recording and reproducing signals on first and on second tracks of the recording medium, recording means for recording a first audio signal of a first type and a second audio signal of a second type on said first and second tracks, respectively, said first and second audio signals being recorded from the same source, and playback means for reproducing said first and second audio signals from said first and second tracks such that one is reproduced with a delay with respect to the other.

It is also known, for example from EP-A-0 036 337, to produce an echo effect by delaying an audio signal in a delay circuit, and combining the primary and delayed audio signals at suitable amplitude levels. Similar arrangements are described in "Patent Abstracts of Japan, vol. 4 no. 52 (E7) [534] (18 April 1980), page 127 (abstract of JP-A-55-23687), and also in WO-A-81/02957 and US-A-4 237 343.

According to a first aspect of the invention there is provided apparatus for reproducing audio signals recorded on a recording medium by a rotary head assembly, said audio signals comprising a frequency-modulated audio signal recorded on main tracks and a pulse-code-modulated audio signal recorded on adjacent auxiliary tracks of the recording medium, said frequency-modulated and pulse-code-modulated audio signals being recorded from the same source, said apparatus comprising:
playback means for reproducing said frequency-modulated and said pulse-code-modulated audio signals from said main and auxiliary tracks such that one is reproduced with a delay with respect to the other, characterised in that said playback means comprises means for mixing said frequency-modulated and pulse-code-modulated reproduced audio signals to produce a mixed audio signal having an echo effect.

According to a second aspect of the invention there is provided apparatus for recording and reproducing signals on a recording medium, the apparatus comprising:
a rotary head assembly capable of recording and reproducing signals on main tracks and on adjacent auxiliary tracks of the recording medium;
recording means for recording a frequency-modulated audio signal on the main tracks and a pulse-code-modulated audio signal on the auxiliary tracks, said frequency-modulated and pulse-code-modulated audio signals being recorded from the same source; and
playback means for reproducing said frequency-modulated and said pulse-code-modulated audio signals from said main and auxiliary tracks such that one is reproduced with a delay with respect to the other, characterised in that said playback means comprises means for mixing said frequency-modulated and pulse-code-modulated reproduced audio signals to produce a mixed audio signal having an echo effect.

A preferred embodiment of the invention enables the mixed frequency-modulated (AFM) and pulse-code-modulated (PCM) audio signals to provide a listener with a feeling of presence, particularly in the case of a musical source. Such an effect gives the impression of surrounding the listener with sound. Such a "surround effect" can be achieved by producing an echo during reproduction of the PCM and AFM audio signals.

The invention will now be described by way of example with reference to the accompanying drawings, throughout which like parts are referred to by like references, and in which:
Figures 1(A) and 1(B) are diagrams respectively of a rotary drum and a magnetic tape in a previously-proposed helical-scan video tape recorder and of the recording format of the video tape recorder capable of recording a PCM audio signal and an AFM audio signal;
Figure 2 is a graph of the frequency spectrum of recorded signals, including AFM audio signals, on video tracks;
Figures 3(A) and 3(B) are circuit block diagrams of a recording and reproducing apparatus respectively, the reproducing apparatus representing an embodiment of the present invention;
Figure 4 is a waveform chart showing the PCM audio signals delayed with respect to the AFM audio signals; and
Figure 5 is a waveform chart showing another example of the signal phase-delay shown in Figure 4.

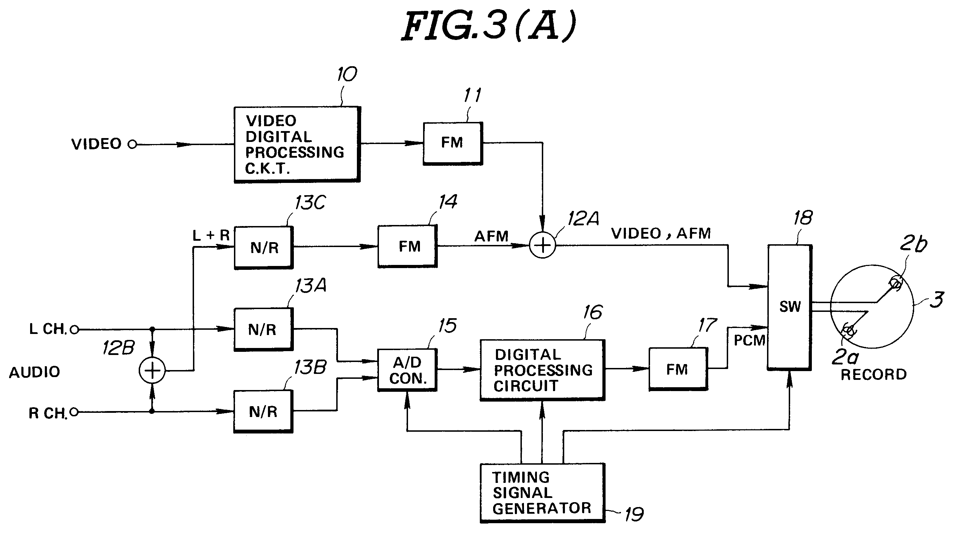

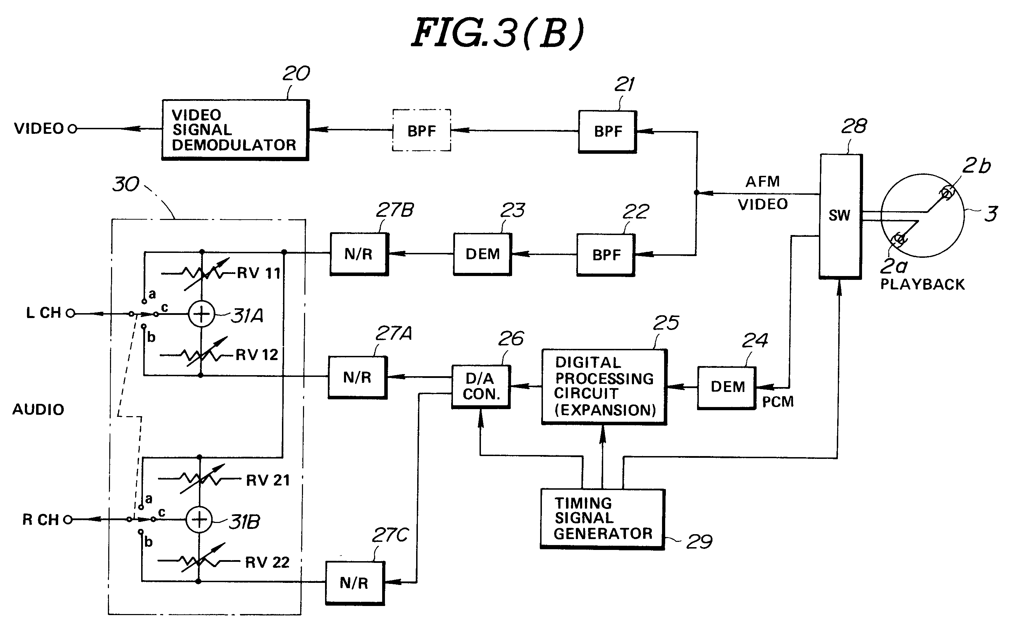

Figure 3(A) shows a recording system in a VTR. The system includes a video signal processing circuit 10 which will generally include a video signal amplifier, a clamp circuit and the like, for receiving a video signal at a video signal input and providing an output signal to the input of a frequency modulator (FM) 11. The output of the frequency modulator 11 is fed to an addition circuit 12A. A stereo audio signal having a left channel (LCH) component and a right channel (RCH) component is provided at respective audio inputs for recording. An addition circuit 12B is provided to add the left channel and right channel components so as to produce a mixed left and right channel signal (L + R). Noise reduction circuits 13A, 13B and 13C are provided for the respective audio signals comprising the left channel component (LCH), the right channel component (RCH), and the mixed left and right channel signal (L + R). A left and right channel stereo audio signal frequency modulator (FM) 14 is connected to the output of the mixed channel noise reduction circuit 13C and produces an AFM audio signal which is added to the frequency-modulated (FM) signal in the addition circuit 12A.

The AFM audio signal is inputted to a switching circuit 18 together with the frequency-modulated video signal and chrominance signal which has been converted to a low frequency band. These signals are superposed, but occupy distinct frequency bands, as shown in Figure 2. The AFM audio signal and the FM video signal are then recorded on the video tracks A and B by the rotary heads 2a,2b.

The inputted audio signals in the left and right channels are also converted into corresponding digital signals by means of an analog-to-digital converter (A/D CON) 15 which is connected to receive the outputs of the noise reduction circuits 13A and 13B. Thereafter, the time axis of the digital signals is compressed by a digital processing circuit 16, in which parity and cyclic redundancy check (CRC) codes are also added. Furthermore, the signal is processed for frequency interleaving to form the PCM audio signal. The PCM audio signal is then provided from the output of the digital processing circuit 16 to a frequency modulator (FM) 17.

The PCM audio signal is transmitted from the frequency modulator 17 via the switching circuit 18, which is switched in response to a signal from a timing signal generator 19, to the two rotary heads 2a,2b for recording the PCM audio signal on the auxiliary tracks a,b of the magnetic tape. The timing signal generator 19 also controls the operation of the analog-to-digital converter 15 and the digital processing circuit 16.

Hence the same audio signal (from the same sound source) is converted into an AFM audio signal and a PCM audio signal, one being superposed on the video tracks A and B on which the video signal is also recorded, and the other being recorded on the auxiliary tracks a,b appended to the corresponding video tracks A and B, as shown in Figure 2. It may be noted that the part of the tracks on which the chrominance signal is recorded is omitted from the drawings.

Figure 3B shows a reproducing system in a VTR according to the preferred embodiment.

As shown in Figure 3(B), the signals on the video tracks to be outputted from a switching circuit 28 during reproduction or playback are separated into a video signal component and an AFM audio signal component by means of two respective band pass filters 21 and 22. The switching circuit 28 is controlled by a timing signal generator 29 during playback. The separated video signal may then be outputted through another band pass filter (shown in phantom) if necessary, and via a video signal demodulator 20 to a normal video amplifier (not shown) for receiving the separated video output. The separated AFM audio signal is passed to a mixing circuit 30 via a demodulator (DEM) 23 connected to the output of the band pass filter 22 and having its output in circuit with a noise reduction circuit 27B. The PCM audio signal recorded on the auxiliary tracks a,b is also retrieved at times specified by the timing circuit 29. A digital processing circuit 25 receives the PCM audio signal via a demodulator (DEM) 24 connected to the switching circuit 28, and performs error correction on the basis of the parity and CRC codes, time-axis decompression and deinterleaving. The resulting signal is converted into an analog signal by means of a digital-to-analog (D/A) converter 26. Both the digital processing circuit 25 and the D/A converter 26 are also controlled during playback by the timing signal generator 29. Finally, the converted analog signal is sent to the mixing circuit 30 by way of a pair of noise reduction circuits 27A and 27C.

The mixing circuit 30 includes a switching circuit which selects the demodulated AFM audio signal from the noise reduction circuit 27B, the demodulated PCM audio signal from the noise reduction circuits 27A,27C, or left and right channel signals mixed from both audio signals via addition circuits 31A,31B. The mixing circuit 30 further comprises two variable resistors RV11 and RV12 for the left channel (LCH) audio output and two variable resistors RV21 and RV22 for the right channel (RCH) audio output. The resistor RV11 controls the AFM signal content mixed by the addition circuit 31A in the right channel, while the resistor RV21 controls the AFM signal mixed in the right channel addition circuit. The resistors RV12 and RV22 similarly control the mixing of the demodulated PCM analog signals in the circuits 31A,31B in the left and right channels.

Since the above-described helical-scan VTR can produce a combined (stereo) signal made up of both AFM and PCM audio signals, the audio output can simulate the acoustics of live sound production, as explained below.

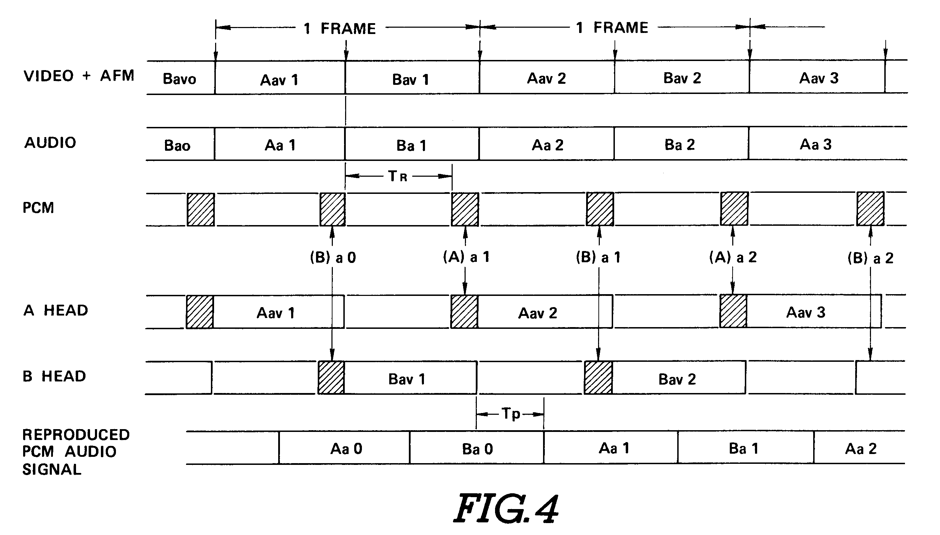

As shown in the chart of Figure 4, the two rotary heads record each of the frames of the video signal plus an AFM audio signal Aav₁, Bav₁, ..... sequentially so that they are recorded alternatingly on tracks An,Bn. Such a sequence is shown in the row labeled VIDEO + AFM, for each of several representative frames. Each frame thus comprises an A field and a B field. However, since it is necessary to record the PCM audio signal in a way which is time-compressed by at least a factor of six on the auxiliary tracks a,b, the audio signal Aa₁ (shown in the row labeled AUDIO) in the Aav₁ field becomes a signal (A)a₁ delayed by a period T_{R} with respect to the phase of the audio signal Aa₁ in order to allow interleaving, time-axis compression of the audio signal Aa₁ and addition of the CRC and parity codes during recording. The time compression of the PCM audio signal is shown in the row labeled PCM.

The PCM audio signal (A)a₁ obtained by these means is then recorded on the auxiliary track adjoining the track for the video plus AFM signals in the Aav₂ field so as to have a delay of about one field with respect to the Aav₁ field. Such a recording method is shown in the row labeled A HEAD. Similarly, signals in the B field for each frame are time compressed and recorded, as shown on the chart for the signals Bav₁, Ba₁, and (B)a₁ recorded on the B HEAD track.

During reproduction, the rotary head 2a continuously reproduces the signal (A)a₁ and the video signal plus AFM audio signal Aav₂. Since the PCM audio signal derived from the auxiliary track (A)a₁ must be time-axis expanded, deinterleaved, and error corrected by the digital processing circuit 25 as shown in Figure 3(B), the PCM audio signal is finally converted into the original analog audio signal Aa₁ after a time delay of Tp, as shown in the row labeled REPRODUCED PCM AUDIO SIGNAL. Thus, the PCM audio signal recorded on the auxiliary track is reproduced after a total delay of about one frame and a half (2 1/2 fields) with respect to the AFM audio signal recorded on the video track.

Hence, if the two different types of audio signals derived from the same sound source are mixed at an appropriate level ratio by the mixing circuit 30 shown in Figure 3(B), the resulting sound includes an echo component which provides a surround effect and gives a listener an impression of presence in a concert hall.

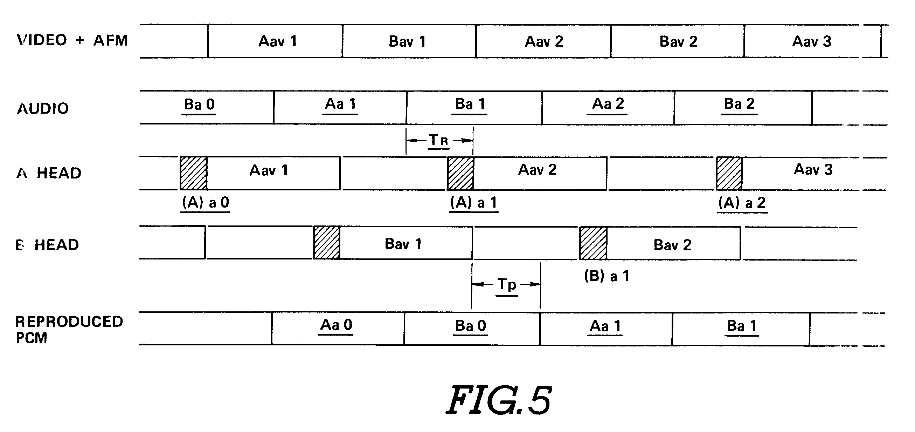

The delay of the PCM audio signal with respect to the AFM audio signal is a natural consequence of the digital processing. However, as shown in Figure 5, the audio signal prior to the PCM time compression ^{A}a1 may previously start at an intermediate point of one video field and end at an intermediate point in the next field by means of and controlled by the timing signal generator 19. Even in this case, if the audio signals are digitally processed for recording within the period T_{R}, and digitally processed for reproduction within the period Tp, the delay with respect to the AFM audio signal reproduced from the video track can be reduced to about two fields. Hence, the phase difference between the AFM audio signal and the PCM audio signal during reproduction can be adjusted so that the degree of echo effect can be adjusted.

As described hereinabove, the helical-scan VTR is provided with a mixing circuit so that an audio output providing an impression of presence similar to that in a concert hall can be achieved. This special acoustical effect can also give the impression of a broader sound stage, and hence of a wider video screen.

## Claims

1. Apparatus for reproducing audio signals recorded on a recording medium (3) by a rotary head assembly (2a, 2b), said audio signals comprising a frequency-modulated audio signal (AFM) recorded on main tracks (A, B) and a pulse-code-modulated audio signal (PCM) recorded on adjacent auxiliary tracks (a, b) of the recording medium, said frequency-modulated (AFM) and pulse-code-modulated (PCM) audio signals being recorded from the same source, said apparatus comprising:
playback means (22 to 30) for reproducing said frequency-modulated (AFM) and said pulse-code-modulated (PCM) audio signals from said main (A, B) and auxiliary (a, b) tracks such that one is reproduced with a delay with respect to the other, characterised in that said playback means (22 to 30) comprises means (30) for mixing said frequency-modulated (AFM) and pulse-code-modulated (PCM) reproduced audio signals to produce a mixed audio signal having an echo effect.

2. Apparatus according to claim 1, wherein said main tracks are video tracks (A,B) of said recording medium (3).

3. Apparatus for recording and reproducing signals on a recording medium (3), the apparatus comprising:
a rotary head assembly (2a, 2b) capable of recording and reproducing signals on main tracks (A, B) and on adjacent auxiliary tracks (a, b) of the recording medium (3);
recording means (10 to 19) for recording a frequency-modulated audio signal (AFM) on the main tracks (A, B) and a pulse-code-modulated audio signal (PCM) on the auxiliary tracks, said frequency-modulated and pulse-code-modulated audio signals being recorded from the same source; and
playback means (22 to 30) for reproducing said frequency-modulated (AFM) and said pulse-code-modulated (PCM) audio signals from said main (A, B) and auxiliary (a, b) tracks such that one is reproduced with a delay with respect to the other, characterised in that said playback means (22 to 30) comprises means (30) for mixing said frequency-modulated (AFM) and pulse-code-modulated (PCM) reproduced audio signals to produce a mixed audio signal having an echo effect.

4. Apparatus according to claim 3, wherein said main tracks are video tracks (A, B) of said recording medium (3).

5. Apparatus according to claim 4, wherein;
said rotary head assembly comprises a plurality of rotary magnetic heads (2a,2b) installed on a rotary drum and is operable to scan obliquely on the magnetic tape (3) which is wound and run on the rotary drum through a given angle to form said auxiliary track (a,b) and said video track (A,B) for each field on the magnetic tape (3); and
said recording means (10 to 19) is operable to record said pulse-code modulated audio signal (PCM) on the auxiliary track (a, b) in time-axis-compressed form and to record said frequency-modulated audio signal (AFM) with a video signal on the subsequent video track (A,B) by means of the rotary heads (2a,2b) for each field.

6. Apparatus according to claim 5, wherein the recording means comprises means (16,19) for providing a given phase delay for the audio signal to be recorded on the auxiliary track (a,b) with respect to the audio signal to be recorded on the video track (A,B) so that a phase difference occurs between the audio signal to be recorded on each video track (A,B) and that reproduced from each auxiliary track (a,b).

7. Apparatus according to claim 6, wherein the phase difference between the audio signal to be recorded on each video track (A,B) and the audio signal reproduced from each auxiliary track (a,b) corresponds to about 2½ fields when the audio signals to be recorded on each video track and auxiliary track are in phase with each other.

8. Apparatus according to claim 7, wherein said means (16,19) for providing a given phase delay is operable to process the audio signals to give a settable phase delay.

9. Apparatus according to claim 8, wherein the given delay corresponds substantially to a half field.

10. Apparatus according to claim 2 or to any one of claims 4 to 9, wherein said playback means includes means (20,21) for retrieving video signals, recorded in said video tracks (A,B) with said frequency-modulated audio signals (AFM), separate from said frequency-modulated audio signals (AFM).

11. Apparatus according to any one of the preceding claims, comprising first signal retrieving means (28,22,23) for retrieving and processing said frequency-modulated audio signal (AFM) from said main track (A,B), and second signal retrieving means (28,24,25,26) for retrieving and processing said pulse-code-modulated audio signal (PCM) from said auxiliary track (a,b).

12. Apparatus according to claim 11, wherein said mixing means (30) includes means (RV11,RV12,RV21,RV22) for controlling the respective amplitudes of said frequency-modulated (AFM) and pulse-code-modulated (PCM) audio signals so that one simulates an echo of the other.

13. Apparatus according to claim 11 or claim 12, wherein said mixing means (30) is operable to combine said frequency-modulated (AFM) and pulse-code-modulated (PCM) audio signals with a variable phase offset.

14. Apparatus according to any one of the preceding claims, wherein said mixing means (30) is operable to select and output a reproduced audio signal from among the reproduced frequency-modulated audio signal (AFM), the reproduced pulse-code-modulated audio signal (PCM), and the mixed audio signal having the echo effect.

## Patentansprüche

1. Gerät zur Wiedergabe von Audiosignalen, die mittels einer drehenden Kopfanordnung (2a, 2b) auf einem Aufzeichnungsmedium (3) aufgezeichnet sind, wobei die Audiosignale ein frequenzmoduliertes Audiosignal (AFM) , das auf Hauptspuren (A, B) aufgezeichnet ist, und ein puls-code-moduliertes Audiosignal (PCM) aufweisen, das auf anschließenden Hilfsspuren (a, b) des Aufzeichnungsmediums aufgezeichnet ist, wobei das frequenzmodulierte (AFM) und das puls-code-modulierte (PCM) Audiosignal von derselben Quelle aufgezeichnet ist, wobei das Gerät aufweist:
- eine Wiedergabeeinrichtung (22 bis 30), um das frequenzmodulierte (AFM) und das puls-code-modulierte (PCM) Audiosignal von den Haupt (A, B)- und den Hilfsspuren (a, b) wiederzugeben, so daß eines gegenüber dem anderen verzögert wiedergegeben ist,
dadurch gekennzeichnet,
daß die Wiedergabeeinrichtung (22 bis 30) eine Einrichtung (30) zum Mischen der wiedergegebenen frequenzmodulierten (AFM) und puls-code-modulierten (PCM) Audiosignale aufweist, um ein gemischtes Audiosignal zu erzeugen, das einen Echoeffekt aufweist.

2. Gerät nach Anspruch 1, bei dem die Hauptspuren Videospuren (A, B) des Aufzeichnungsmediums (3) sind.

3. Gerät zum Aufzeichnen und Wiedergeben von Signalen auf einem Aufzeichnungsmedium (3), wobei das Gerät aufweist:
eine drehende Kopfanordnung (2a, 2b), um auf Hauptspuren (A, B) und auf benachbarten Hilfsspuren (a, b) des Aufzeichnungsmediums (3) Signale aufzuzeichnen und wiederzugeben,
eine Aufzeichnungseinrichtung (10 bis 19), um auf den Hauptspuren (A, B) ein frequenzmoduliertes (AFM) und auf den Hilfsspuren ein puls-code-moduliertes (PCM) Audiosignal aufzuzeichnen, wobei das frequenzmodulierte und das puls-code-modulierte Audiosignal von derselben Quelle aufgezeichnet wird, und
eine Wiedergabeeinrichtung (22 bis 30), um das frequenzmodulierte (AFM) und das puls-code-modulierte (PCM) Audiosignal von den Haupt (A,B) - und den Hilfsspuren (a,b) wiederzugeben, so daß das eine gegenüber dem anderen verzögert wiedergegeben wird,
dadurch gekennzeichnet,
daß die Wiedergabeeinrichtung (22 bis 30) eine Einrichtung (30) aufweist, um das wiedergegebenen frequenzmodulierte (AFM) und das puls-code-modulierte (PCM) Audiosignal zu mischen, um ein gemischtes Audiosignal mit einem Echoeffekt zu erzeugen.

4. Gerät nach Anspruch 3, bei dem die Hauptspuren Videospuren (A, B) des Aufzeichnungsmediums (3) sind.

5. Gerät nach Anspruch 4, bei dem
die drehende Kopfanordnung mehrere drehende Magnetköpfe (2a, 2b) aufweist, die auf einer Drehtrommel angeordnet sind und die zum schrägen Abtasten des Magnetbandes (3) betreibbar ist, das gewunden ist und in einem vorgegebenen Winkel über die Drehtrommel läuft, um die Hilfsspur (a, b) und die Videospur (A, B) für jedes Feld auf dem Magnetband (3) zu bilden, und bei dem
die Aufzeichnungseinrichtung (10 bis 19) betrieben wird, um das puls-code-modulierte (PCM) Audiosignal auf der Hilfsspur (a, b) in zeitachsenkomprimierter Form aufzuzeichnen, und um das frequenzmodulierte Audiosignal (AFM) mit einem Videosignal auf der nachfolgenden Videospur (A, B) mittels der drehenden Köpfe (2a, 2b) für jedes Feld aufzuzeichnen.

6. Gerät nach Anspruch 5, bei dem die Aufzeichnungseinrichtung eine Einrichtung (16,19) aufweist, um für das auf der Hilfsspur (a,b) aufzuzeichnende Audiosignal bezüglich dem auf der Videospur (A, B) aufzuzeichnenden Audiosignal eine vorgegebene Phasenverzögerung vorzusehen, so daß eine Phasendifferenz zwischen dem auf jeder Videospur (A, B) aufzuzeichnenden Audiosignal und dem auftritt, das von jeder Hilfsspur (a, b) wiedergegeben wird.

7. Gerät nach Anspruch 6, bei dem die Phasendifferenz zwischen dem auf jeder Videospur (A, B) aufzuzeichnenden Audiosignal und dem Audiosignal, das von jeder Hilfsspur (a, b) wiedergegeben wird, etwa 2 1/2 Feldern entspricht, wenn die Audiosignale, die auf jeder Videospur und auf jeder Hilfsspur aufzuzeichnen sind, miteinander in Phase sind.

8. Gerät nach Anspruch 7, bei dem die Einrichtung (16, 19) zum Vorsehen einer vorgegebenen Phasenverschiebung betrieben wird, um die Audiosignale zum Vorsehen einer einstellbaren Phasenverzögerung zu verarbeiten.

9. Gerät nach Anspruch 8, bei dem die vorgegebene Verzögerung im Wesentlichen einem halben Feld enspricht.

10. Gerät nach Anspruch 2 oder einem der Ansprüche 4 bis 9, bei dem die Wiedergabeeinrichtung eine Einrichtung (20, 21) aufweist, um, getrennt von den frequenzmodulierten Audiosignalen (AFM) , Videosignale wiederzugewinnen, die mit den frequenzmodulierten Audiosignalen (AFM) auf den Videospuren (A, B) aufgezeichnet sind.

11. Gerät nach einem der vorhergehenden Ansprüche, mit einer ersten Signalwiedergewinnungseinrichtung (28, 22, 23), um das frequenzmodulierte Audiosignal (AFM) von der Hauptspur (A, B) wiederzugewinnen und zu verarbeiten und mit einer zweiten Signalwiedergewinnungseinrichtung (28, 24, 25, 26), um die puls-code-modulierten Audiosignale (PCM) von der Hilfsspur (a, b) wiederzugewinnen.

12. Gerät nach Anspruch 11, bei dem die Mischeinrichtung (30) eine Einrichtung (RV11, RV12, RV21, RV22) aufweist, um die jeweiligen Amplituden der frequenzmodulierten (AFM) und puls-code-modulierten (PCM) Audiosignale so zu steuern, daß das eine ein Echo des Anderen simuliert.

13. Gerät nach Anspruch 11 oder 12, bei dem die Mischeinrichtung (30) betrieben wird, um das frequenzmodulierte (AFM) und das puls-code-modulierte (PCM) Audiosignal mit veränderbarem Phasenoffset zu verbinden.

14. Gerät nach einem der vorhergehenden Ansprüche, bei dem die Mischeinrichtung (30) betrieben wird, um ein wiedergegebenes Audiosignal aus dem wiedergegebenen frequenzmodulierten Audiosiugnal (AFM), dem wiedergegebenen puls-code-modulierten Audiosignal (PCM) und dem gemischten Audiosignal, das den Echoeffekt aufweist, auszuwählen und auszugeben.

## Revendications

1. Appareil pour reproduire des signaux audio enregistrés sur un support d'enregistrement (3) par un assemblage de têtes tournantes (2a, 2b), lesdits signaux audio comprenant un signal audio modulé en fréquence (AFM) enregistré sur des pistes principales (A, B) et un signal audio modulé par impulsion codée (PCM) enregistré sur des pistes auxiliaires voisines (a, b) du support d'enregistrement, lesdits signaux audio modulés en fréquence (AFM) et modulés par impulsion codée (PCM) étant enregistrés à partir de la même source, ledit appareil comprenant :
un dispositif de lecture (22 à 30) pour reproduire lesdits signaux audio modulés en fréquence (AFM) et modulés par impulsion codée (PCM) à partir desdites pistes principales (A, B) et auxiliaires (a, b) de sorte que l'un est reproduit avec un retard par rapport à l'autre, caractérisé en ce que ledit dispositif de lecture (22 à 30) comprend un dispositif (30) pour mélanger lesdits signaux audio modulés en fréquence (AFM) et modulés par impulsion codée (PCM) reproduit pour produire un signal audio mélangé ayant un effet d'écho.

2. Appareil selon la revendication 1, dans lequel lesdites pistes principales sont des pistes vidéo (A, B) dudit support d'enregistrement (3).

3. Appareil pour enregistrer et reproduire des signaux sur un support d'enregistrement (3), l'appareil comprenant :
un assemblage de têtes tournantes (2a, 2b) capable d'enregistrer et de reproduire des signaux sur des pistes principales (A, B) et sur des pistes auxiliaires voisines (a, b) du support d'enregistrement (3) ;
un dispositif d'enregistrement (10 à 19) pour enregistrer un signal audio modulé en fréquence (AFM) sur les pistes principales (A, B) et un signal audio modulé par impulsion codée (PCM) sur les pistes auxiliaires, lesdits signaux audio modulés en fréquence et modulés par impulsion codée étant enregistrés à partir de la même source ; et
un dispositif de lecture (22 à 30) pour reproduire lesdits signaux modulés en fréquence (AFM) et modulés par impulsion codée (PCM) à partir desdites pistes principales (A, B) et auxiliaires (a, b) de sorte que l'un est reproduit avec un retard par rapport à l'autre, caractérisé en ce que ledit dispositif de lecture (22 à 30) comprend un dispositif (30) pour mélanger lesdits signaux audio reproduits modulés en fréquence (AFM) et modulés par impulsion codée (PCM) pour produire un signal audio mélangé ayant un effet d'écho.

4. Appareil d'enregistrement selon la revendication 3 ; dans lequel lesdites pistes principales sont des pistes vidéo (A, B) dudit support d'enregistrement (3).

5. Appareil selon la revendication 4 , dans lequel :
ledit assemblage de têtes tournantes comprend une pluralité de têtes magnétiques tournantes (2a, 2b) installées sur un tambour tournant et est utilisable pour balayer obliquement la bande magnétique (3) qui est enroulée et défile sur le tambour tournant avec un angle donné pour former ladite piste auxiliaire (a, b) et ladite piste vidéo (A, B) pour chaque trame sur la bande magnétique (3) ; et
ledit dispositif d'enregistrement (10 à 19) est utilisable pour enregistrer ledit signal audio modulé par impulsion codée (PCM) sur la piste auxiliaire (a, b) sous forme compressée selon l'axe temporel et pour enregistrer ledit signal audio modulé en fréquence (AFM) avec un signal vidéo sur la piste vidéo suivante (A, B) au moyen de têtes tournantes (2a, 2b) pour chaque trame.

6. Appareil selon la revendication 5, dans lequel le dispositif d'enregistrement comprend un dispositif (16, 19) pour fournir un retard de phase donné pour le signal audio à enregistrer sur la piste auxiliaire (a, b) par rapport au signal audio à enregistrer sur la piste vidéo (A, B) de sorte qu'une différence de phase se produit entre le signal audio à enregistrer sur chaque piste vidéo (A, B) et celui reproduit à partir de chaque piste auxiliaire (a, b).

7. Appareil selon la revendication 6, dans lequel la différence de phase entre le signal audio à enregistrer sur chaque piste vidéo (A, B) et le signal audio reproduit à partir de chaque piste auxiliaire (a, b) correspond à environ 2½ trames lorsque les signaux audio à enregistrer sur chaque piste vidéo et piste auxiliaire sont en phase les uns avec les autres.

8. Appareil selon la revendication 7, dans lequel ledit dispositif (16, 19) pour fournir un retard de phase donné est utilisable pour traiter les signaux audio pour donner un retard de phase réglable.

9. Appareil selon la revendication 8, dans lequel le retard donné correspond essentiellement à une demi-trame.

10. Appareil selon la revendication 2 ou l'une quelconque des revendications 4 à 9, dans lequel le dispositif de lecture comprend un dispositif (20, 21) pour retrouver des signaux vidéo, enregistrés dans lesdites pistes vidéo (A, B) avec lesdits signaux audio modulés en fréquence (AFM), séparés desdits signaux audio modulés en fréquence (AFM).

11. Appareil selon l'une quelconque des revendications précédentes, comprenant un premier dispositif pour retrouver un signal (28, 22, 23) pour retrouver et traiter ledit signal audio modulé en fréquence (AFM) à partir de ladite piste principale (A, B), et un second dispositif pour retrouver un signal (28, 24, 25, 26) pour retrouver et traiter ledit signal audio modulé par impulsion codée (PCM) à partir de ladite piste auxiliaire (a, b).

12. Appareil selon la revendication 11, dans lequel ledit dispositif mélangeur (30) comprend un dispositif (RV11, RV12, RV21, RV22) pour commander les amplitudes respectives desdits signaux audio modulés en fréquence (AFM) et modulés par impulsion codée (PCM) de sorte que l'un simule l'écho de l'autre.

13. Appareil selon la revendication 11 ou la revendication 12, dans lequel ledit dispositif mélangeur (30) est utilisable pour mélanger lesdits signaux audio modulés en fréquence (AFM) et modulés par impulsion codée (PCM) avec un décalage de phase variable.

14. Appareil selon l'une quelconque des revendications précédentes, dans lequel ledit dispositif mélangeur (30) est utilisable pour sélectionner et fournir un signal audio reproduit à partir du signal audio modulé en fréquence reproduit (AFM), du signal audio modulé par impulsion codée reproduit (PCM), et du signal audio mélangé ayant l'effet d'écho.
